# EUROPEAN PATENT SPECIFICATION

(11) **EP 3 143 823 B1**
(45) Date of publication and mention of the grant of the patent: **10.04.2019**
(21) Application number: 15723798.3
(22) Date of filing: 05.05.2015
(51) Int. Cl.: H04J 11/00, H04W 24/02, H04L 5/00

(54) **PHYSICAL CELL IDENTIFIER AND PHYSICAL RANDOM ACCESS CHANNEL FREQUENCY OFFSET JOINT PLANNING**
GEMEINSAME PLANNUNG EINES PHISIKALISCHEN ZELLIDENTIFIKATORS UND EINES FREQUENZ-VERSATZES DES PHYSIKALISCHEN DIREKTZUGRIFFS-KANALS
PLANIFICATION CONJOINTE D'IDENTIFICATEUR DE CELLULE PHYSIQUE ET DE DÉCALAGE DE FRÉQUENCE DE CANAL D'ACCÈS ALÉATOIRE PHYSIQUE

(30) Priority: 15.05.2014 US 201414278248
(43) Date of publication of application: 22.03.2017
(73) Proprietor: Qualcomm Incorporated, San Diego, CA 92121-1714 (US)
(72) Inventor: CHEVALLIER, Christophe, San Diego, California 92121-1714 (US); SINGH, Damanjit, San Diego, California 92121-1714 (US); SHEN, Cong, San Diego, California 92121-1714 (US); RADULESCU, Andrei Dragos, San Diego, California 92121-1714 (US)
(74) Representative: Dunlop, Hugh Christopher
(86) International application number: PCT/US2015/029303
(87) International publication number: WO 2015/175269

(56) References cited:
- US-A1- 2009 129 291
- US-A1- 2010 020 710
- US-A1- 2011 105 135
- US-A1- 2012 046 065

## Description

### BACKGROUND

This application is directed to wireless communications systems, and more particularly to methods and apparatuses for PCI and physical random access channel (PRACH) offset joint planning.

A wireless network may be deployed over a defined geographical area to provide various types of services (e.g., voice, data, multimedia services, etc.) to users within that geographical area. The wireless communication network may include a number of base stations that can support communication for a number of user equipments (UEs). A UE may communicate with a base station via the downlink and uplink.

The 3rd Generation Partnership Project (3GPP) Long Term Evolution (LTE) advanced cellular technology is an evolution of Global System for Mobile communications (GSM) and Universal Mobile Telecommunications System (UMTS). The LTE physical layer (PHY) provides a highly efficient way to convey both data and control information between base stations, such as an evolved Node Bs (eNBs), and mobile entities, such as UEs. In prior applications, a method for facilitating high bandwidth communication for multimedia has been single frequency network (SFN) operation. SFNs utilize radio transmitters, such as, for example, eNBs, to communicate with subscriber UEs.

In addition to existing mobile phone networks, new smaller base stations have emerged, which may be installed in homes and offices and provide enhanced indoor wireless coverage to mobile units using broadband Internet connections. Such small base stations are generally known as small cells, picocells, microcells, access point base stations, Home Node Bs (HNB), or Home eNode Bs (HeNB). Often, such these small cell base stations are connected to the Internet and the mobile operator's network and provide connectivity to nearby authorized UEs.

In an LTE network, a Physical Layer Cell Identity (PCI or Cell ID) may be used for cell identification and channel synchronization. A PCI value may uniquely identify a base station within a wireless network. However, in a case of PCI confliction, significant radio interference can occur, which may result in complete loss of service in impacted coverage areas.

Base stations may maintain data including PCI values for neighboring base stations in a wireless network. Neighboring base stations may be those base stations geographically near a particular base station and may represent viable candidates to which to a mobile communication device being currently served by the particular base station might handed off to as the mobile communication changes location.

When a new base station is added or removed from a wireless network, conventional systems may use a network listen (NL) operation that sniffs for the PCI of neighboring base stations to avoid PCI confliction. NL operations may be resource intensive and may not be available to all base stations. In the absence of NL, a new base station may not be aware of which PCI are used in proximity, thus may unwittingly choose a PCI already in use by a neighboring base station. Therefore, it is beneficial to provide a new method of selecting a non-conflicting PCI without NL.

US 2009/129291 A1 describes an access point configured based on acquired information.

US 2012/046065 A1 describes a method and a communication network node for enabling automatic planning and handling of root sequences.

US 2010/020710 A1 describes systems and methodologies that facilitate providing physical cell identifier assignment.

### SUMMARY

The object of the invention is solved by the subject-matter of the independent claims. Preferred embodiments are defined in the dependent claims. In accordance with the invention a method of wireless communication by a network entity and a wireless communication apparatus are provided as set forth in the claims.

The following presents a simplified summary of one or more examples in order to provide a basic understanding of such examples. This summary is not an extensive overview of all contemplated examples, and is intended to neither identify key or critical elements of all examples nor delineate the scope of any or all examples. Its sole purpose is to present some concepts of one or more examples in a simplified form as a prelude to the more detailed description that is presented later.

In accordance with one or more aspects of the examples described herein, there is provided a system and method for physical cell identifier (PCI) and PRACH offset joint planning. In one example, a network entity may determine an energy level for each of a plurality of non-overlapping PRACH frequency offsets and select a PRACH frequency offset from the plurality of PRACH frequency offsets, based at least in part on the determined energy levels. The network entity may determine a plurality of possible physical cell identifiers (PCIs) for the selected PRACH frequency offset and select a PCI from the plurality of possible PCIs.

### BRIEF DESCRIPTION OF THE DRAWINGS

These and other sample aspects of the disclosure will be described in the detailed description and the appended claims that follow, and in the accompanying drawings, wherein:
FIG. 1A illustrates an example wireless communication network;
FIG. 1B illustrates a table of possible PCIs for each of a set of PRACH frequency offsets;
FIG. 1C illustrates a table of possible PCIs and corresponding root sequences;
FIG. ID illustrates a block diagram of an example of a communication system for PCI and PRACH offset joint planning;
FIG. 2 illustrates a block diagram of example communication system components;
FIG. 3 illustrates an example of a methodology for PCI and PRACH offset joint planning;
FIG. 4 illustrates optional steps in accordance with the methodology of FIG. 3;
FIG. 5 illustrates an example of an apparatus for PCI and PRACH offset joint planning in accordance with the methodology of FIG. 3; and
FIG. 6 illustrates optional components for the apparatus of FIG. 5.

### DETAILED DESCRIPTION

Techniques for PCI and physical random access channel (PRACH) offset joint planning are described herein. The subject disclosure provides a technique for improving the identification of neighboring cells by a serving cell. A new serving cell in a neighborhood may need to select a physical cell identifier (PCI) for identification. However, if the new serving cell does not know which PCI are used by neighboring cells, the new serving cell may unintentionally pick a PCI that is already used by one of the neighboring cells, leading to interference. Network listen (NL) is an operation commonly used by cells with NL functionality to discover PCIs of neighboring cells. However, NL operations may be resource intensive and may not be available to all cells.

The subject disclosure provides a new method of choosing a PCI least likely to conflict with a neighboring cell's PCI. A cell's PCI and PRACH frequency offset may be linked. Thus, a cell may determine PRACH frequency offset information to help determine PCI values.

In the subject disclosure, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

The techniques may be used for various wireless communication networks such as wireless wide area networks (WWANs) and wireless local area networks (WLANs). The terms "network" and "system" are often used interchangeably. The WWANs may be code division multiple access (CDMA), time division multiple access (TDMA), frequency division multiple access (FDMA), orthogonal frequency-division multiple access (OFDMA), single carrier frequency division multiple access (SC-FDMA) and/or other networks. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A) are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). A WLAN may implement a radio technology such as IEEE 802.11 (Wi-Fi), Hiperlan, etc.

As used herein, the downlink (or forward link) refers to the communication link from the base station to the UE, and the uplink (or reverse link) refers to the communication link from the UE to the base station. A base station may be, or may include, a macrocell or microcell. Microcells (e.g., picocells, home nodeBs, small cells, small cell access points, and small cell base stations) are characterized by having generally much lower transmit power than macrocells, and may often be deployed without central planning. In contrast, macrocells are typically installed at fixed locations as part of a planned network infrastructure, and cover relatively large areas.

The techniques described herein may be used for the wireless networks and radio technologies mentioned above as well as other wireless networks and radio technologies. For clarity, certain aspects of the techniques are described below for 3GPP network and WLAN, and LTE and WLAN terminology is used in much of the description below.

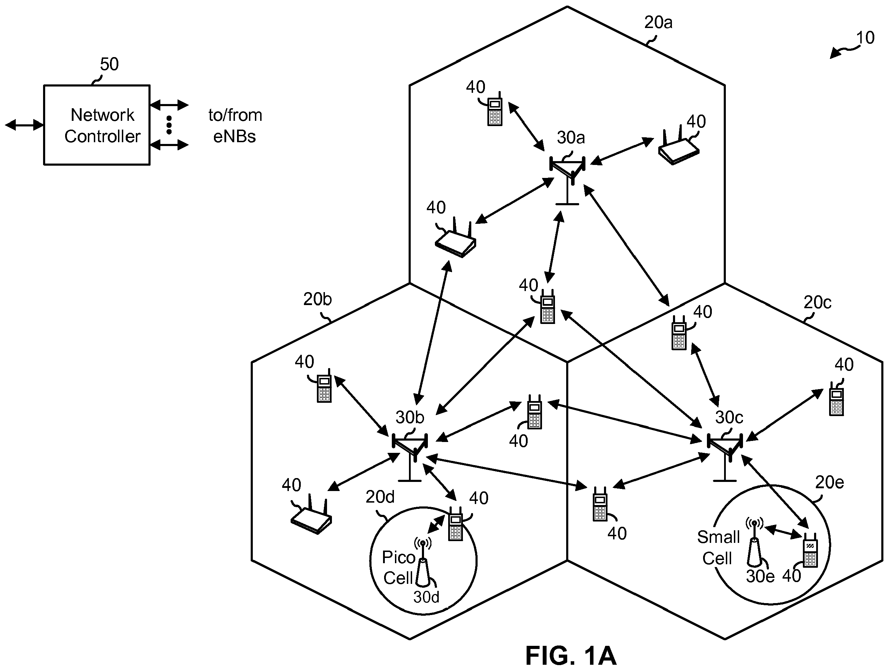

FIG. 1A illustrates an example wireless communication network 10, which may be an LTE network or some other wireless network. Wireless network 10 may include a number of evolved Node Bs (eNBs) 30 and other network entities. An eNB may be an entity that communicates with mobile entities and may also be referred to as a base station, a Node B, an access point, etc. Although the eNB typically has more functionalities than a base station, the terms "eNB" and "base station" are used interchangeably herein. Each eNB 30 may provide communication coverage for a particular geographic area and may support communication for mobile entities located within the coverage area. To improve network capacity, the overall coverage area of an eNB may be partitioned into multiple (e.g., three) smaller areas. Each smaller area may be served by a respective eNB subsystem. In 3GPP, the term "cell" can refer to the smallest coverage area of an eNB and/or an eNB subsystem serving this coverage area, depending on the context in which the term is used.

An eNB may provide communication coverage for a macrocell, a picocell, a microcell, a small cell, and/or other types of cell. A macrocell may cover a relatively large geographic area (e.g., several kilometers in radius) and may allow unrestricted access by UEs with service subscription. A picocell may cover a relatively small geographic area and may allow unrestricted access by UEs with service subscription. A small cell may cover a relatively small geographic area (e.g., a home) and may allow restricted access by UEs having association with the small cell (e.g., UEs in a Closed Subscriber Group (CSG)). In the example shown in FIG. 1A, eNBs 30a, 30b, and 30c may be macro eNBs for macrocell groups 20a, 20b, and 20c, respectively. Each of the cell groups 20a, 20b, and 20c may include a plurality (e.g., three) of cells or sectors. An eNB 30d may be a pico eNB for a picocell 20d. An eNB 30e may be a small cell eNB, small cell base station, or small cell access point (FAP) for a small cell 20e.

Wireless network 10 may also include relays (not shown in FIG. 1A). A relay may be an entity that can receive a transmission of data from an upstream station (e.g., an eNB or a UE) and send a transmission of the data to a downstream station (e.g., a UE or an eNB). A relay may also be a UE that can relay transmissions for other UEs.

A network controller 50 may couple to a set of eNBs and may provide coordination and control for these eNBs. Network controller 50 may be a single network entity or a collection of network entities. Network controller 50 may communicate with the eNBs via a backhaul. The eNBs may also communicate with one another, e.g., directly or indirectly via a wireless or wireline backhaul.

UEs 40 may be dispersed throughout wireless network 10, and each UE may be stationary or mobile. A UE may also be referred to as a mobile station, a terminal, an access terminal, a subscriber unit, a station, etc. A UE may be a cellular phone, a personal digital assistant (PDA), a wireless modem, a wireless communication device, a handheld device, a laptop computer, a cordless phone, a wireless local loop (WLL) station, a smart phone, a netbook, a smartbook, etc. A UE may be able to communicate with eNBs, relays, etc. A UE may also be able to communicate peer-to-peer (P2P) with other UEs.

Wireless network 10 may support operation on a single carrier or multiple carriers for each of the downlink (DL) and uplink (UL). A carrier may refer to a range of frequencies used for communication and may be associated with certain characteristics. Operation on multiple carriers may also be referred to as multi-carrier operation or carrier aggregation. A UE may operate on one or more carriers for the DL (or DL carriers) and one or more carriers for the UL (or UL carriers) for communication with an eNB. The eNB may send data and control information on one or more DL carriers to the UE. The UE may send data and control information on one or more UL carriers to the eNB. In one design, the DL carriers may be paired with the UL carriers. In this design, control information to support data transmission on a given DL carrier may be sent on that DL carrier and an associated UL carrier. Similarly, control information to support data transmission on a given UL carrier may be sent on that UL carrier and an associated DL carrier. In another design, cross-carrier control may be supported. In this design, control information to support data transmission on a given DL carrier may be sent on another DL carrier (e.g., a base carrier) instead of the DL carrier.

Carrier aggregation allows expansion of effective bandwidth delivered to a user terminal through concurrent use of radio resources across multiple carriers. When carriers are aggregated, each carrier is referred to as a component carrier. Multiple component carriers are aggregated to form a larger overall transmission bandwidth. Two or more component carriers can be aggregated to support wider transmission bandwidths.

Wireless network 10 may support carrier extension for a given carrier. For carrier extension, different system bandwidths may be supported for different UEs on a carrier. For example, the wireless network may support (i) a first system bandwidth on a DL carrier for first UEs (e.g., UEs supporting LTE Release 8 or 9 or some other release) and (ii) a second system bandwidth on the DL carrier for second UEs (e.g., UEs supporting a later LTE release). The second system bandwidth may completely or partially overlap the first system bandwidth. For example, the second system bandwidth may include the first system bandwidth and additional bandwidth at one or both ends of the first system bandwidth. The additional system bandwidth may be used to send data and possibly control information to the second UEs.

Wireless network 10 may support data transmission via single-input single-output (SISO), single-input multiple-output (SIMO), multiple-input single-output (MISO), or MIMO. For MIMO, a transmitter (e.g., an eNB) may transmit data from multiple transmit antennas to multiple receive antennas at a receiver (e.g., a UE). MIMO may be used to improve reliability (e.g., by transmitting the same data from different antennas) and/or to improve throughput (e.g., by transmitting different data from different antennas).

Wireless network 10 may support single-user (SU) MIMO, multi-user (MU) MIMO, Coordinated Multi-Point (CoMP), etc. For SU-MIMO, a cell may transmit multiple data streams to a single UE on a given time-frequency resource with or without precoding. For MU-MIMO, a cell may transmit multiple data streams to multiple UEs (e.g., one data stream to each UE) on the same time-frequency resource with or without precoding. CoMP may include cooperative transmission and/or joint processing. For cooperative transmission, multiple cells may transmit one or more data streams to a single UE on a given time-frequency resource such that the data transmission is steered toward the intended UE and/or away from one or more interfered UEs. For joint processing, multiple cells may transmit multiple data streams to multiple UEs (e.g., one data stream to each UE) on the same time-frequency resource with or without precoding.

Wireless network 10 may support hybrid automatic retransmission (HARQ) in order to improve reliability of data transmission. For HARQ, a transmitter (e.g., an eNB) may send a transmission of a data packet (or transport block) and may send one or more additional transmissions, if needed, until the packet is decoded correctly by a receiver (e.g., a UE), or the maximum number of transmissions has been sent, or some other termination condition is encountered. The transmitter may thus send a variable number of transmissions of the packet.

Wireless network 10 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time.

Wireless network 10 may utilize frequency division duplex (FDD) or time division duplex (TDD). For FDD, the DL and UL may be allocated separate frequency channels, and DL transmissions and UL transmissions may be sent concurrently on the two frequency channels. For TDD, the DL and UL may share the same frequency channel, and DL and UL transmissions may be sent on the same frequency channel in different time periods.

In an LTE air interface, PCIs are used for cell identification and channel synchronization. A PCI is an identification of a cell at the physical layer. Two cells with the same PCI may have interfering reference signals. In a case of PCI confliction, significant radio interference can occur, which may result in complete loss of service in impacted coverage areas.

Base stations may maintain data including PCI values for neighboring base stations in a wireless network. When a new base station is added or removed from a wireless network, conventional systems may use a NL operation that sniffs for the PCI of neighboring base stations to avoid PCI confliction. NL operations may be resource intensive and may not be available to all base stations. Hoever, in the absence of NL, a new base station may not be aware of which PCI are used in proximity, thus may unwittingly choose a PCI already in use by a neighboring base station. Therefore, it is beneficial to provide a new method of selecting a non-conflicting PCI without NL.

In some embodiments, one or more components of an access point may select a non-conflicting PCI without using NL. A cell's PCI and PRACH frequency offset may be linked. Therefore, each PRACH frequency offset may allow a limited set of possible PCI values.

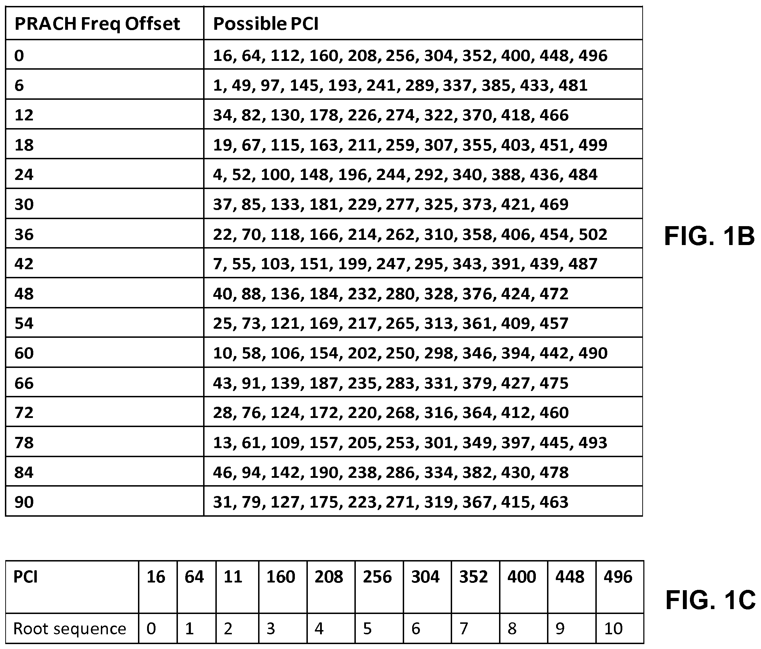

FIG. 1B illustrates a table of possible PCIs for each of a set of PRACH frequency offsets. Synchronization signals may explain a relationship between the PRACH frequency offsets and the corresponding possible PCI. UEs may use synchronization signals to achieve radio frame, subframe, slot and symbol synchronization in a time domain, identify a center of a channel bandwidth in a frequency domain, and deduce the PCI. Synchronization signals may be regularly broadcasted by access points, such as twice within every radio frame. Synchronization signals may include Primary Synchronization Signals (PSS) and Secondary Synchronization Signals (SSS). To ensure all Cell-specific Reference Signals (CRS) are colliding in a network, all cells in the network may use a same PSS.

If the PSS is one, then there may only be one hundred sixty eight different PCI available. As show in FIG. 1B, for a PSS of one, the available PCI may include 1, 4, 7,..., 3*SSS + PSS,..., 502, wherein SSS refers to a Secondary Synchronization Signal. For a PSS of zero, the available PCI may include 0, 3, 6,..., 3*SSS + PSS,..., 501. For a PSS of two, the available PCIs may include 2, 5, 8,..., 3*SSS + PSS,..., 503.

The network may minimize interference on a PRACH channel by using different PRACH frequency offsets for adjacent cells. Each PRACH channel may use six resource blocks (RB), with a location of a first frequency determined by the PRACH frequency offset. Referring to FIG. 1B, for a non-overlapping PRACH channel, the PRACH frequency offsets may range from zero to ninety with an increment of six. A twenty megahertz PRACH channel may therefore have sixteen non-overlapping PRACH channels. A ten megahertz PRACH channel may only have eight non-overlapping PRACH channels. FIG. 1B shows possible PCIs for a PSS of one and for a twenty megahertz PRACH channel.

In an example implementation, a new access point with the intention of selecting a non-conflicting PCI may select a PRACH frequency offset with a lowest probability of use by neighboring access points. The access point may determine the PRACH frequency offset with the lowest probability of use by determining an energy level for each PRACH frequency offset and selecting the PRACH frequency offset with the lowest energy level. The access point may select a PCI from the set of possible PCIs values for the selected PRACH frequency offset.

FIG. 1C illustrates a table of possible PCIs and corresponding root sequences for a PRACH frequency offset of zero. For example, each PCI may be indexed by a corresponding root sequence counting from zero to ten to form a root sequence index. The access point may attempt to select a PCI from the set of possible PCIs values with a lowest probability of use by a neighboring cell from the possible PCIs values. A root sequence for at least one neighboring access point may be determined to be occupied by detecting PRACH preambles in the selected PRACH frequency offset. However, if occupation of root sequences for the at least one neighboring access point is not detectable, then the access point may randomly select a PCI from the set of possible PCIs for the selected PRACH frequency offset, or using other such methods.

FIG. ID illustrates a block diagram of an example of a communication system for PCI and PRACH offset joint planning. For illustration purposes, various aspects of the disclosure will be described in the context of one or more access terminals, access points, and network entities that communicate with one another. It should be appreciated, however, that the teachings herein may be applicable to other types of apparatuses or other similar apparatuses that are referenced using other terminology. For example, in various examples access points may be referred to or implemented as base stations, NodeBs, eNodeBs, small cells, microcells, picocells, macrocells, and so on, while access terminals may be referred to or implemented as user equipment (UEs), mobile stations, and so on.

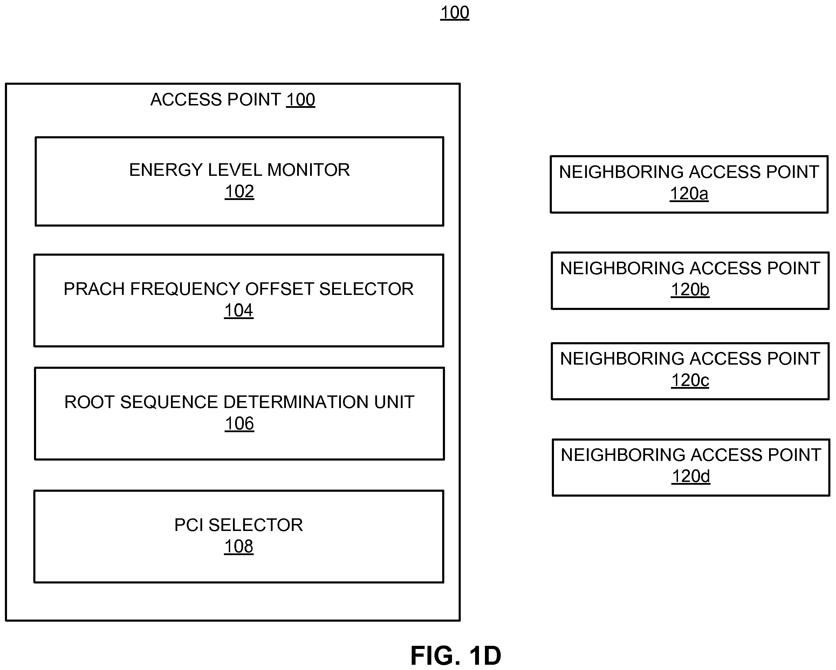

The system 100 may include an access point 100 and at least one neighboring access point 120. It should also be appreciated that system 100, access point 110, and neighboring access points 120 can include additional components not shown in FIG. 1D.

The access point 100 in the system 100 may provide access to one or more services (e.g., network connectivity) for one or more wireless terminals (e.g., access terminal, UE, mobile entity, mobile device) 110. For example, an LTE access point may communicate with one or more network entities (not shown) to facilitate wide area network connectivity. Such network entities may take various forms such as, for example, one or more radio and/or core network entities.

In various examples, the network entities may be responsible for or otherwise be involved with handling: network management (e.g., via an operation, administration, management, and provisioning entity), call control, session management, mobility management, gateway functions, interworking functions, or some other suitable network functionality. In a related aspect, mobility management may relate to or involve: keeping track of the current location of access terminals through the use of tracking areas, location areas, routing areas, or some other suitable technique; controlling paging for access terminals; and providing access control for access terminals. Also, two of more of these network entities may be co-located and/or two or more of such network entities may be distributed throughout a network.

The access point 100 may include an energy level monitor 102. The energy level monitor 102 may detect for an energy level for each of a plurality of non-overlapping PRACH frequency offsets. In a related aspect, the energy level monitor 102 may further rank the plurality of PRACH offsets by energy level.

The access point 100 may include a PRACH frequency offset selector 104. The PRACH frequency offset selector 104 may determine a set of possible PCIs for the plurality of non-overlapping PRACH frequency offsets. The PRACH frequency offset selector 104 may select a PRACH frequency offset with a lowest energy level. The PRACH frequency offset with the lowest energy level may have a set of corresponding possible PCIs matching with the fewest PCI of neighboring access points 120. Therefore, the PCI for the PRACH frequency offset with the lowest energy level may provide a lowest probability of conflicting with existing PCI for the neighboring access points 120.

In an example aspect, the access point 100 may include a root sequence determination unit 106. The root sequence determination unit 106 may determine which root sequences are occupied by the neighboring access points 120. The root sequence determination unit 106 may determine whether a root sequence is occupied by a neighboring access point 120 by detecting a random access channel preamble for a neighboring access point 120. A PCI of a neighboring access point 120 may be indexed by a corresponding root sequence.

The access point 100 may include a PCI selector 108. The PCI selector 108 may select a PCI from the possible PCIs for the PRACH frequency offset selected by the PRACH frequency offset selector 104. The access point may attempt to select a PCI from the set of possible PCIs values with a lowest probability of use by a neighboring cell from the possible PCIs values. If root sequence information for neighboring access points 120 is available, then the PCI selector 108 may select a PCI corresponding to an unused (unoccupied) root sequence. However, if root sequence information for neighboring access points is not available, then the access point may randomly select a PCI from the set of possible PCIs for the selected PRACH frequency offset, or may select a PCI using other such methods.

In an example implementation, the access point 110 may repeat a process of monitoring for the energy level for each of the plurality of PRACH frequency offsets and selecting a PCI with the lowest probability of conflict at regular intervals. In related aspects, the process may be repeated for certain network events that may suggest a change in PCI used by access points in a neighborhood.

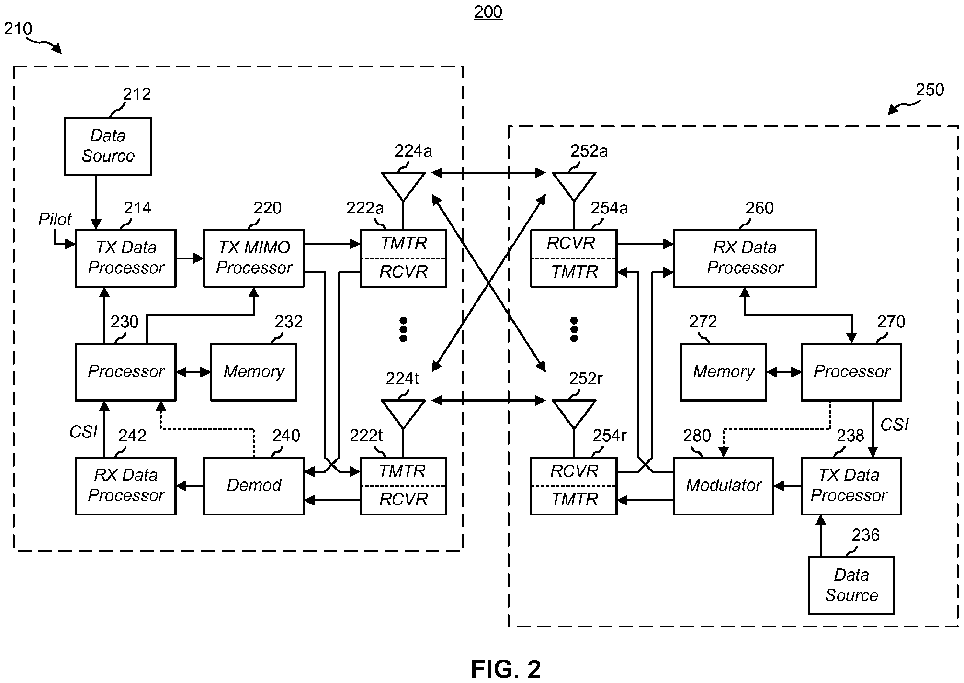

FIG. 2 illustrates a transmitter system 210 (also known as the access point, base station, or eNB) and a receiver system 250 (also known as access terminal, mobile device, or UE) for a communication system 200. In the present disclosure, the transmitter system 210 may correspond to a WS-enabled eNB or the like, whereas the receiver system 250 may correspond to a WS-enabled UE or the like.

At the transmitter system 210, traffic data for a number of data streams is provided from a data source 212 to a transmit (TX) data processor 214. Each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides N_{T} modulation symbol streams to N_{T} transmitters (TMTR) 222a through 222t. In certain examples, TX MIMO processor 220 applies beam-forming weights to the symbols of the data streams and to the antenna from which the symbol is being transmitted.

Each transmitter 222 receives and processes a respective symbol stream to provide one or more analog signals, and further conditions (e.g., amplifies, filters, and up-converts) the analog signals to provide a modulated signal suitable for transmission over the MIMO channel. N_{T} modulated signals from transmitters 222a through 222t are then transmitted from N_{T} antennas 224a through 224t, respectively.

At receiver system 250, the transmitted modulated signals are received by N_{R} antennas 252a through 252r and the received signal from each antenna 252 is provided to a respective receiver (RCVR) 254a through 254r. Each receiver 254 conditions (e.g., filters, amplifies, and down-converts) a respective received signal, digitizes the conditioned signal to provide samples, and further processes the samples to provide a corresponding "received" symbol stream.

An RX data processor 260 then receives and processes the N_{R} received symbol streams from N_{R} receivers 254 based on a particular receiver processing technique to provide N_{T} "detected" symbol streams. The RX data processor 260 then demodulates, de-interleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion. The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beam-forming weights then processes the extracted message.

As used herein, an access point may comprise, be implemented as, or known as a NodeB, an eNodeB, a radio network controller (RNC), a base station (BS), a radio base station (RBS), a base station controller (BSC), a base transceiver station (BTS), a transceiver function (TF), a radio transceiver, a radio access point, a basic service set (BSS), an extended service set (ESS), a macrocell, a macro node, a microcell, a Home eNB (HeNB), a small cell, a small cell node, a pico node, or some other similar terminology.

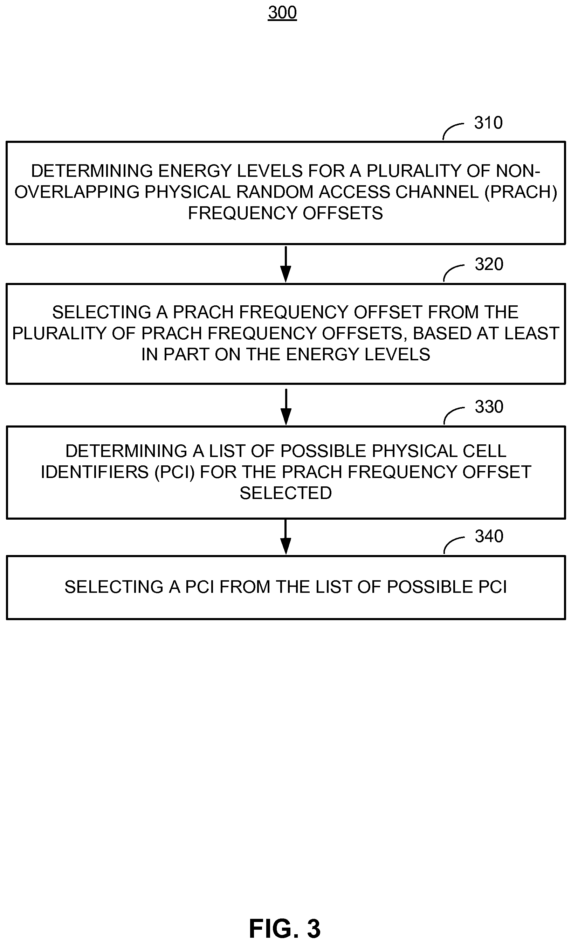

In accordance with one or more aspects of the examples described herein, with reference to FIG. 3, there is shown a methodology 300 for PCI and PRACH offset joint planning. The method may be operable, such as, for example, by the access point 100, as shown in FIG. 1C, or the like.

The method 300 may involve, at 310 determining an energy level for each of a plurality of physical random access channel (PRACH) frequency offsets. In an example implementation, the energy level monitor 102 may determine the energy level, as shown in FIG. 1D.

The method 300 may involve, at 320, selecting a PRACH frequency offset from the plurality of PRACH frequency offsets, based at least in part on the determined energy levels. In an example implementation, the PRACH frequency offset selector 104 may select the PRACH frequency offset, as shown in FIG. 1D.

The method 300 may involve, at 330, determining a plurality of possible physical cell identifiers (PCIs) for the selected PRACH frequency offset. In an example implementation, the PRACH frequency offset selector 104 may determine the plurality of possible PCIs, as shown in FIG. ID.

The method 300 may involve, at 340, selecting a PCI from the plurality of possible PCIs. In an example implementation, the PCI selector 108 may select the PCI, as shown in FIG. ID.

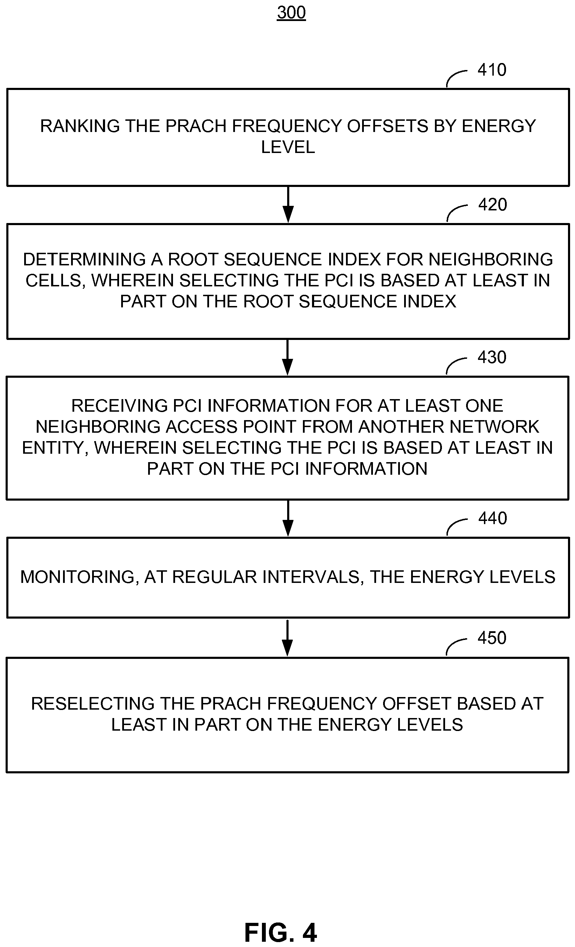

FIG. 4 illustrates further operations or aspects that are optional in accordance with the methodology of FIG. 3 and may be performed by a mobile device or component(s) thereof. The method 300 may terminate after any of the shown blocks without necessarily having to include any subsequent downstream block(s) that may be illustrated. It is further noted that numbers of the blocks do not imply a particular order in which the blocks may be performed according to the method 300.

The method 300 may optionally involve, at 410, ranking the plurality of PRACH frequency offsets by the determined energy level. In an example implementation, the PRACH frequency offset selector 104 may rank the plurality of PRACH frequency offsets, as shown in FIG. ID.

The method 300 may optionally involve, at 420, receiving PCI information for at least one neighboring access point from another network entity, wherein selecting the PCI is based at least in part on the PCI information.

The method 300 may optionally involve, at 430, monitoring, at regular intervals, the energy level for each of the plurality of PRACH frequency offsets. In an example implementation, the energy level monitor 102 may perform the monitoring, as shown in FIG. ID.

The method 300 may optionally involve, at 440, reselecting the PRACH frequency offset based at least in part on the monitored energy level for each of the plurality of PRACH frequency offsets. In an example implementation, the PRACH frequency offset selector may perform the reselecting, as shown in FIG. ID.

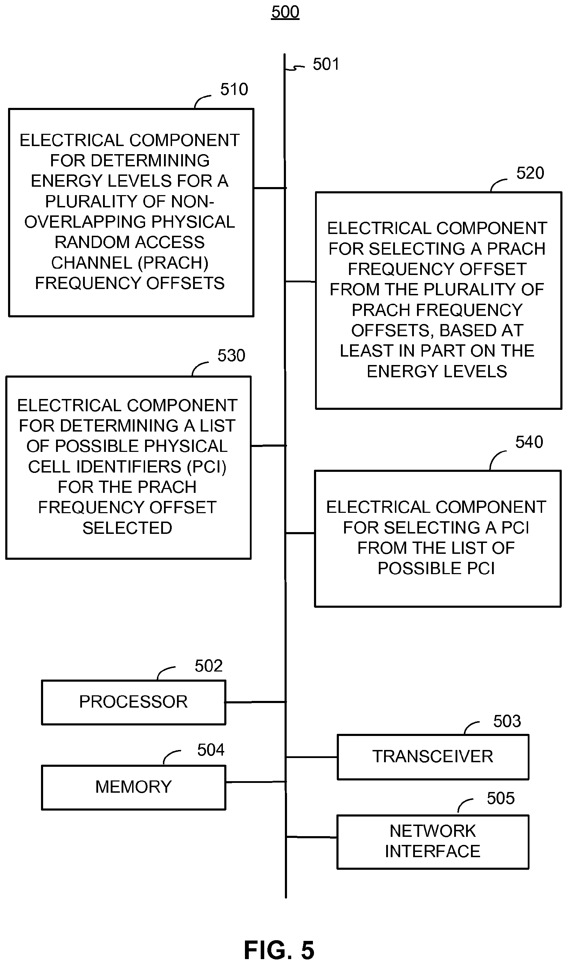

In accordance with one or more aspects of the examples described herein, FIG. 5 illustrates an example of an apparatus for for PCI and PRACH offset joint planning, in accordance with the methodology of FIG. 3. The exemplary apparatus 500 may be configured as a computing device or as a processor or similar device/component for use within. In one example, the apparatus 500 may include functional blocks that can represent functions implemented by a processor, software, or combination thereof (e.g., firmware). In another example, the apparatus 500 may be a system on a chip (SoC) or similar integrated circuit (IC).

In one example, apparatus 500 may include an electrical component or module 510 for determining an energy level for each of a plurality of physical random access channel (PRACH) frequency offsets.

The apparatus 500 may include an electrical component 520 for selecting a PRACH frequency offset from the plurality of PRACH frequency offsets, based at least in part on the determined energy levels.

The apparatus 500 may include an electrical component 530 for determining a plurality of possible physical cell identifiers (PCIs) for the selected PRACH frequency offset.

The apparatus 500 may include an electrical component 540 for selecting a PCI from the plurality of possible PCIs.

In further related aspects, the apparatus 500 may optionally include a processor component 502. The processor 502 may be in operative communication with the components 510-540 via a bus 501 or similar communication coupling. The processor 502 may effect initiation and scheduling of the processes or functions performed by electrical components 510-540.

In yet further related aspects, the apparatus 500 may include a radio transceiver component 503. A standalone receiver and/or standalone transmitter may be used in lieu of or in conjunction with the transceiver 503. The apparatus 500 may also include a network interface 505 for connecting to one or more other communication devices or the like. The apparatus 500 may optionally include a component for storing information, such as, for example, a memory device/component 504. The computer readable medium or the memory component 504 may be operatively coupled to the other components of the apparatus 500 via the bus 501 or the like. The memory component 504 may be adapted to store computer readable instructions and data for affecting the processes and behavior of the components 510-540, and subcomponents thereof, or the processor 502, or the methods disclosed herein. The memory component 504 may retain instructions for executing functions associated with the components 510-540. While shown as being external to the memory 504, it is to be understood that the components 510-540 can exist within the memory 504. It is further noted that the components in FIG. 5 may comprise processors, electronic devices, hardware devices, electronic sub-components, logical circuits, memories, software codes, firmware codes, etc., or any combination thereof. Persons skilled in the art will appreciate that the functionalities of each component of apparatus 500 can be implemented in any suitable component of the system or combined in any suitable manner.

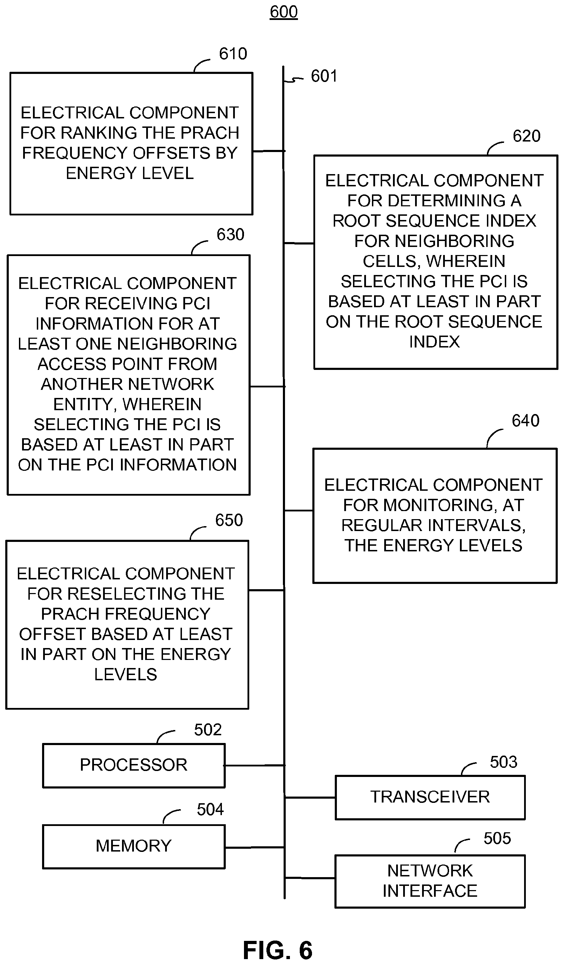

In accordance with one or more aspects of the examples described herein, FIG. 6 illustrates optional components for the apparatus of FIG. 5. The apparatus 600 may include an electrical component or module 610 for ranking the plurality of PRACH frequency offsets by the determined energy level.

The apparatus 600 may include an electrical component 620 for receiving PCI information for at least one neighboring access point from another network entity, wherein selecting the PCI is based at least in part on the PCI information.

The apparatus 600 may include an electrical component 630 for monitoring, at regular intervals, the energy level for each of the plurality of PRACH frequency offsets.

The apparatus 600 may include an electrical component 640 for reselecting the PRACH frequency offset based at least in part on the monitored energy level for each of the plurality of PRACH frequency offsets.

For the sake of conciseness, the rest of the details regarding apparatus 600 are not further elaborated on; however, it is to be understood that the remaining features and aspects of the apparatus 600 are substantially similar to those described above with respect to apparatus 500 of FIG. 5. Persons skilled in the art will appreciate that the functionalities of each component of apparatus 600 can be implemented in any suitable component of the system or combined in any suitable manner.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a non-transitory computer-readable medium. Non-transitory computer-readable media includes both computer storage media and communication media including any medium that facilitates transfer of a computer program from one place to another. A storage media may be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Disk and disc, as used herein, includes compact disc (CD), laser disc, optical disc, digital versatile disc (DVD), floppy disk and blue ray disc where disks usually reproduce data magnetically, while discs reproduce data optically with lasers. Combinations of the above should also be included within the scope of non-transitory computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure.

## Claims

1. A method of wireless communication performed by a network entity, comprising:
determining an energy level for each of a plurality of physical random access channel, PRACH, frequency offsets (310);
selecting a PRACH frequency offset from the plurality of PRACH frequency offsets, based at least on the determined energy level (320);
determining a plurality of physical cell identifiers, PCIs, available for the selected PRACH frequency offset (330); and
selecting a PCI from the plurality of PCIs available (340).

2. The method of claim 1, further comprising ranking the plurality of PRACH frequency offsets by the determined energy level.

3. The method of claim 2, wherein selecting the PRACH frequency offset comprises selecting a lowest energy level PRACH frequency offset.

4. The method of claim 1, wherein selecting the PCI is based at least on determining which of a root sequence index for at least one neighboring cell is occupied.

5. The method of claim 4, wherein determining which of the root sequence index comprises detecting at least one random access channel preamble for the selected PRACH frequency offset.

6. The method of claim 1, further comprising receiving PCI information for at least one neighboring access point from another network entity, wherein selecting the PCI is based at least on the PCI information.

7. The method of claim 1, further comprising monitoring, at regular intervals, the energy level for each of the plurality of PRACH frequency offsets.

8. The method of claim 7, further comprising reselecting the PRACH frequency offset based at least on the monitored energy level for each of the plurality of PRACH frequency offsets.

9. The method of claim 1, wherein the network entity is an access point.

10. A wireless communication network apparatus, comprising:
means for determining an energy level (102) for each of a plurality of physical random access channel, PRACH, frequency offsets;
means for selecting a PRACH frequency offset (104) from the plurality of PRACH frequency offsets, based at least on the determined energy level;
means for determining a plurality of physical cell identifiers, PCIs, available for the selected PRACH frequency offset; and
means for selecting a PCI (108) from the plurality of PCIs available.

11. The apparatus of claim 10, further comprising means for ranking the plurality of PRACH frequency offsets by the determined energy level.

12. The apparatus of claim 11, wherein means for selecting the PRACH frequency offset comprises means for selecting a lowest energy level PRACH frequency offset.

13. The apparatus of claim 10, wherein means for selecting the PCI is based at least on means for determining which of a root sequence index for at least one neighboring cell is occupied (106).

14. The apparatus of claim 13, wherein means for determining which of the root sequence index comprises means for detecting at least one random access channel preamble for the selected PRACH frequency offset.

15. A computer program product, comprising a computer-readable medium, in which instructions are stored, which instructions, when read by a computer cause the computer to perform each of the method steps of any of claims 1 to 9.

## Patentansprüche

1. Ein Verfahren für eine drahtlose Kommunikation, das durch eine Netzeinheit ausgeführt wird, aufweisend:
Bestimmen des Energiepegels für jeden aus einer Vielzahl von PRACH (Physical Random Access Channel)-Frequenzversätzen (310),
Auswählen eines PRACH-Frequenzversatzes aus der Vielzahl von PRACH-Frequenzversätzen basierend wenigstens auf dem bestimmten Energiepegel (320),
Bestimmen einer Vielzahl von Physikalische-Zellen-Identifizierern (PCIs), die für den ausgewählten PRACH-Frequenzversatz verfügbar sind (330), und
Auswählen eines PCI aus der Vielzahl von verfügbaren PCIs (340).

2. Verfahren nach Anspruch 1, das weiterhin das Rangordnen der Vielzahl von PRACH-Frequenzversätzen anhand des bestimmten Energiepegels aufweist.

3. Verfahren nach Anspruch 2, wobei das Auswählen des PRACH-Frequenzversatzes das Auswählen des PRACH-Frequenzversatzes mit dem niedrigsten Energiepegel aufweist.

4. Verfahren nach Anspruch 1, wobei das Auswählen des PCI wenigstens auf dem Bestimmen, welcher Rootsequenzindex für wenigstens eine benachbarte Zelle eingenommen wird, basiert.

5. Verfahren nach Anspruch 4, wobei das Bestimmen des Rootsequenzindex das Erfassen wenigstens einer RACH (Random Access Channel)-Präambel für den ausgewählten PRACH-Frequenzversatz aufweist.

6. Verfahren nach Anspruch 1, das weiterhin das Empfangen von PCI-Informationen für wenigstens einen benachbarten Zugriffspunkt von einer anderen Netzeinheit aufweist, wobei das Auswählen des PCI wenigstens auf den PCI-Informationen basiert.

7. Verfahren nach Anspruch 1, das weiterhin das Überwachen, mit regelmäßigen Intervallen, des Energiepegels für jeden aus der Vielzahl von PRACH-Frequenzversätzen aufweist.

8. Verfahren nach Anspruch 7, das weiterhin das erneute Auswählen des PRACH-Frequenzversatzes basierend wenigstens auf dem überwachten Energiepegel für jeden aus der Vielzahl von PRACH-Frequenzversätzen aufweist.

9. Verfahren nach Anspruch 1, wobei die Netzeinheit ein Zugriffspunkt ist.

10. Eine drahtlose Kommunikationsnetzvorrichtung, aufweisend:
Mittel (102) zum Bestimmen des Energiepegels für jeden aus einer Vielzahl von PRACH (Physical Random Access Channel)-Frequenzversätzen,
Mittel (104) zum Auswählen eines PRACH-Frequenzversatzes aus der Vielzahl von PRACH-Frequenzversätzen basierend wenigstens auf dem bestimmten Energiepegel,
Mittel zum Bestimmen einer Vielzahl von Physikalische-Zellen-Identifizierern (PCIs), die für den ausgewählten PRACH-Frequenzversatz verfügbar sind, und
Mittel (108) zum Auswählen eines PCI aus der Vielzahl von verfügbaren PCIs.

11. Vorrichtung nach Anspruch 10, die weiterhin Mittel zum Rangordnen der Vielzahl von PRACH-Frequenzversätzen anhand des bestimmten Energiepegels aufweist.

12. Vorrichtung nach Anspruch 11, wobei die Mittel zum Auswählen des PRACH-Frequenzversatzes Mittel zum Auswählen des PRACH-Frequenzversatzes mit dem niedrigsten Energiepegel aufweisen.

13. Vorrichtung nach Anspruch 10, wobei die Mittel zum Auswählen des PCI wenigstens auf Mitteln (106) zum Bestimmen, welcher Rootsequenzindex für wenigstens eine benachbarte Zelle eingenommen wird, basieren.

14. Vorrichtung nach Anspruch 13, wobei die Mittel zum Bestimmen des Rootsequenzindex Mittel zum Erfassen wenigstens einer RACH (Random Access Channel)-Präambel für den ausgewählten PRACH-Frequenzversatz aufweisen.

15. Ein Computerprogrammprodukt, aufweisend:
ein computerlesbares Medium, auf dem Befehle gespeichert sind, die bei einer Ausführung durch einen Computer veranlassen, dass der Computer die Verfahrensschritte der Ansprüche 1 bis 9 durchführt.

## Revendications

1. Procédé de communication sans fil réalisé par une entité de réseau, comprenant :
une détermination d'un niveau d'énergie pour chacun d'une pluralité de décalages de fréquence de canal d'accès aléatoire physique, PRACH, (310) ;
une sélection d'un décalage de fréquence de PRACH à partir de la pluralité de décalages de fréquence de PRACH, au moins sur la base du niveau d'énergie (320) déterminé ;
une détermination d'une pluralité d'identifiants de cellule physique, PCI, disponibles pour le décalage de fréquence de PRACH (330) sélectionné ; et
une sélection d'un PCI à partir de la pluralité de PCI (340) disponibles.

2. Procédé selon la revendication 1, comprenant en outre un classement de la pluralité de décalages de fréquence de PRACH selon le niveau d'énergie déterminé.

3. Procédé selon la revendication 2, dans lequel une sélection du décalage de fréquence de PRACH comprend une sélection d'un décalage de fréquence de PRACH de niveau d'énergie le plus faible.

4. Procédé selon la revendication 1, dans lequel une sélection du PCI est basée au moins sur une détermination duquel d'un indice de séquence racine pour au moins une cellule voisine est occupé.

5. Procédé selon la revendication 4, dans lequel une détermination duquel de l'indice de séquence racine comprend une détection d'au moins un préambule de canal d'accès aléatoire pour le décalage de fréquence de PRACH sélectionné.

6. Procédé selon la revendication 1, comprenant en outre une réception d'informations de PCI pour au moins un point d'accès voisin à partir d'une autre entité de réseau, dans lequel une sélection du PCI est au moins basée sur les informations de PCI.

7. Procédé selon la revendication 1, comprenant en outre un suivi, à des intervalles réguliers, du niveau d'énergie pour chacun de la pluralité de décalages de fréquence de PRACH.

8. Procédé selon la revendication 7, comprenant en outre une nouvelle sélection du décalage de fréquence de PRACH au moins sur la base du niveau d'énergie suivi pour chacun de la pluralité de décalages de fréquence de PRACH.

9. Procédé selon la revendication 1, dans lequel l'entité de réseau est un point d'accès.

10. Appareil de réseau de communication sans fil, comprenant :
un moyen de détermination d'un niveau d'énergie (102) pour chacun d'une pluralité de décalages de fréquence de canal d'accès aléatoire physique, PRACH ;
un moyen de sélection d'un décalage de fréquence de PRACH (104) à partir de la pluralité de décalages de fréquence de PRACH, au moins sur la base du niveau d'énergie déterminé ;
un moyen de détermination d'une pluralité d'identifiants de cellule physique, PCI, disponibles pour le décalage de fréquence de PRACH sélectionné ; et
un moyen de sélection d'un PCI (108) à partir de la pluralité de PCI disponibles.

11. Appareil selon la revendication 10, comprenant en outre un moyen de classement de la pluralité de décalages de fréquence de PRACH selon le niveau d'énergie déterminé.

12. Appareil selon la revendication 11, dans lequel un moyen de sélection du décalage de fréquence de PRACH comprend un moyen de sélection d'un décalage de fréquence de PRACH de niveau d'énergie le plus faible.

13. Appareil selon la revendication 10, dans lequel un moyen de sélection du PCI est au moins basé sur un moyen de détermination duquel d'un indice de séquence racine pour au moins une cellule voisine est occupé (106).

14. Appareil selon la revendication 13, dans lequel un moyen de détermination duquel de l'indice de séquence racine comprend un moyen de détection d'au moins un préambule de canal d'accès aléatoire pour le décalage de fréquence de PRACH sélectionné.

15. Produit de programme informatique, comprenant :
un support lisible par ordinateur, dans lequel des instructions sont stockées, lesquelles instructions, lorsque lues par un ordinateur amènent l'ordinateur à réaliser chacune des étapes de procédé selon l'une quelconque des revendications 1 à 9.
